# EUROPEAN PATENT APPLICATION

(11) **EP 4 458 132 A1**
(43) Date of publication of application: **06.11.2024**
(21) Application number: 24173075.3
(22) Date of filing: 29.04.2024
(51) Int. Cl.: A01G 13/02

(54) **ADJUSTABLE DIAMETER PROTECTION SLEEVE FOR PLANTS**

(30) Priority: 02.05.2023 IT 202300001776 U
(71) Applicant: Progress Plast SNC di Bordin Lino & C., 31011 Asolo (TV) (IT)
(72) Inventor: BORDIN, LINO, 31010 MASER (TV) (IT)
(74) Representative: Maroscia, Antonio

(57) **Abstract**

The present invention relates to a protection (10) for plants (12), comprising a self-supporting sheet element (11) adapted to be closed on itself to surround a plant (12) and having openings (13) for aerating said plant (12). Said protection (10) for plants (12) has at least one hooking member (22) for coupling to a supporting wire (23) of a cultivation line.

## Description

The present invention relates to a protection for plants.

Such protection can be used, in particular, in farming and floriculture.

To date, there is the need for protecting plants, such as vines and flower plants, from potential damage inadvertently caused by a lawnmower and separate them from different crops.

This need is currently met by using a tubular body made of plastic material to be positioned to surround the plant to be protected or to be separated.

The tubular body is not practical to use due to the flat bottom, although open, with which it is inserted into the ground.

Protections consisting of semi-cylindrical parts that are mutually hinged and closed around the plant to be protected are also available on the market. Each part has at the bottom thereof a portion pointed downwards, adapted to facilitate the penetration into the ground.

This protection is not without drawbacks, above all the fact that, like it also happens with the tubular, the plant is poorly aerated.

Furthermore, the dimension of the protection is difficult to adapt to the dimension of the plant and, in particular, to that of its trunk.

As a matter of fact, the conformation of the parts that form it allows to obtain a cylindrical protection or determined by the joining of pairs of semi-cylindrical parts, to surround the plant.

In order to overcome these drawbacks, the plant protection described in the Italian patent n° 102018000008263 owned by the Applicant in question is known.

The plant protection described in patent 102018000008263 comprises a self-supporting sheet element to be closed around itself to surround a plant, which has openings for aerating the plant.

Despite its commercial success, this plant protection reveals some aspects susceptible of improvement.

**As** a matter of fact, nowadays, in order to anchor a similar plant protection to wires for horizontally supporting cultivation lines, twines or wire segments are used that the operator should tie between a support wire and the protection, for example by passing them through one of the openings.

This determines long and troublesome anchoring operations and the need to use an additional element, such as a twine or wire segment, with resulting consumption and waste of material.

The purpose of the present invention is to provide a plant protection that is capable of improving the prior art in one or more of the aspects mentioned above.

Within this purpose, an object of the present invention is to provide a plant protection which can be anchored to wires for supporting the cultivation lines without having to use other elements.

Another object of the invention is to provide a plant protection which can be anchored to wires for supporting cultivation lines in an easier and quicker manner with respect to similar plant protection of the known type.

Furthermore, the present invention aims at overcoming the drawbacks of the prior art by way of alternative to any prior art solutions.

Last but not least object of the present invention is to provide a plant protection that is highly reliable, that is relatively easy to manufacture and that is cost-effective.

This object, as well as others which will be more apparent hereinafter are achieved by a plant protection comprising a self-supporting sheet element adapted to be closed on itself to surround a plant and having openings for aerating said plant, said plant protection being characterised in that it has at least one hooking member for coupling thereof to a supporting wire of a cultivation line.

Further features and advantages of the invention will be more apparent from the description of a preferred but non-exclusive embodiment of the plant protection according to the invention, shown by way of non-limiting example, in the attached drawings, wherein:
- figure 1 shows the plant protection according to the invention, in a first embodiment, in a perspective view;
- figure 2 shows a part of the plant protection of figure 1;
- figure 3 shows the plant protection according to the invention, in a different embodiment, in a perspective view;
- figure 4 shows the plant protection according to the invention, in a first use application thereof;
- figure 5 shows the plant protection according to the invention, in a second use application thereof.

A plant protection according to the invention, in a first embodiment, is indicated in its entirety with reference numeral 10.

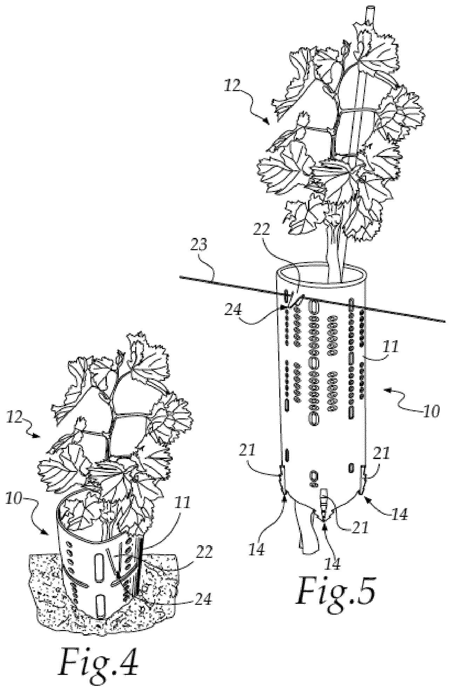

The protection 10 comprises a self-supporting sheet element 11 to be closed around itself to surround a plant 12, as shown in figure 4 or 5.

The self-supporting sheet element 11 is preferably made of medical organic material, suitable for contact with food products, in compliance with the Italian Ministerial Decree 21.03.73.

**In** order to guarantee self-support, it may for example be flexible, semirigid or foldable.

Such sheet element 11 has openings 13 for aerating the plant 12 and, at the lower part with respect to the use position, ground penetration means 14.

**In** particular, the openings 13 for aerating the plant 12 comprise holes 15 and eyelets 16.

The protection 10 advantageously comprises closing means 17 for closing the sheet element 11, adapted to allow the modulable width closure as a function of the dimensions of the plant 12.

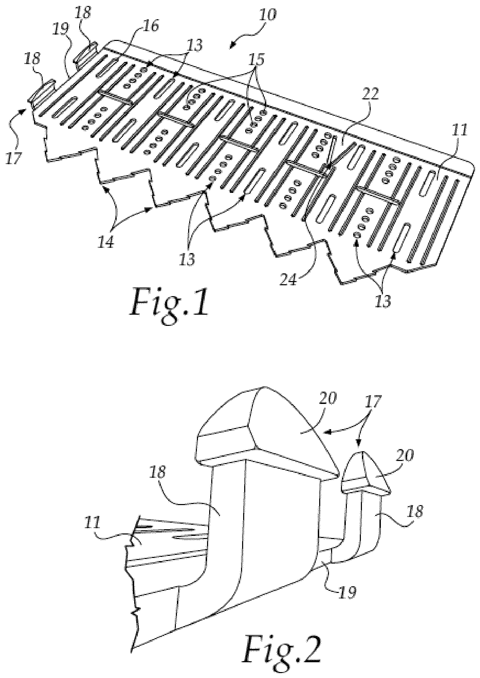

In particular, such closing means 17 in turn comprise at least one hook 18, a pair in the example shown in figure 1 and 2, extending from one side 19 of the sheet element 11.

The side 19 is vertical with respect to the use position of the protection 10, shown in figure 4 or 5.

The hooks 18 are adapted to be inserted with respective end portions 20 in corresponding eyelets 16 of holes 15 present on the sheet element 11, the same that allow to aerate the plant 12.

The end portions 20 suitably have a greater width than the remaining part, so as to prevent the inadvertent protrusion from the eyelets 16.

In order to modulate the width of the protection 10 and simultaneously optimise the aeration of the plant 12, the protection comprises a row of eyelets 16, that are parallel and equally spaced, into which - chosen from one of them - there can be inserted the respective hook 18, aligned with the same row of eyelets 16.

The ground penetration means 14 consist of tips protruding from the lower side of the sheet element 11, that is lower than the use position.

In the example shown in figure 1, the tips are serrated on the sides so as to facilitate penetration into the ground and hinder inadvertent removal.

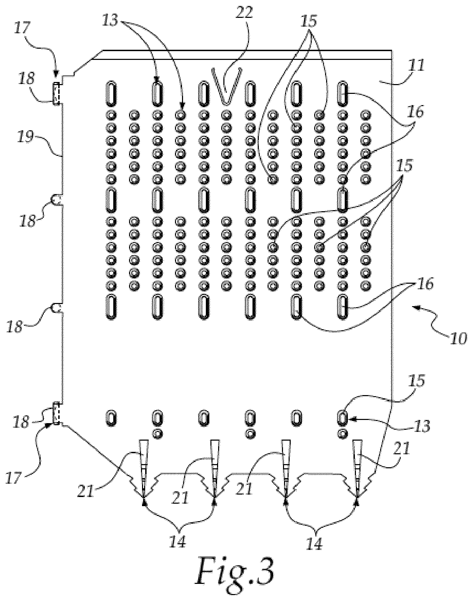

In the example shown in figure 3, the ground penetration means 14 also have serrated protrusions 21 so as to improve penetration into the ground and hinder inadvertent removal.

**One** of the peculiarities of the invention, lies in the fact that the protection 10 has at least one hooking member 22 for coupling to a supporting wire 23 of a cultivation line (shown in figure 5).

This hooking member 22 consists of a tab obtained in the sheet element 11.

Advantageously, such tab has a triangular profile with a free vertex 24 fully detached from the sheet element 11 and it faces downwards in use configuration, and it is joined to the rest of the sheet element 11 at one side of the triangle, with substantially horizontal configuration, opposite to the free vertex 24 and arranged above the latter in use configuration.

The use of the protection, according to the invention, is as follows.

The sheet element 11 is folded to surround the plant 12 and the hooks 18 are inserted into the respective eyelets 16.

Substantially, as a function of the width of the plant around which the sheet element 11 is to be closed, the end portions 20 of the hooks 18 may be inserted into the eyelets 16 closest thereto, so as to obtain narrower circumferences, or in more distant eyelets 16 so as to obtain wider circumferences.

The unused part of sheet element 11, outside the circumference, may be cut.

The protection, positioned around the plant 12, may therefore:
- be driven into the ground, so as to penetrate thereinto using special penetration means 14, so as to anchor it into the ground and maintain its position over time and in the event of harsh weather and wind,
- and/or to be anchored to a wire 23 for supporting a cultivation line using the tab of the hooking member 22, placing the wire 23 between the tab of the hooking member 22 and the sheet element 11, as shown in figure 5.

In a possible variant of the protection 10, there may be provided for hooks on the surface of the sheet element, for example to replace rows of holes 15.

In this manner, the parts cut after the closing are in turn provided with closing means and they can be reused to create new protections or be joined to other sheet elements.

**As** a matter of fact, a wider protection 10 which can be obtained by joining several sheet elements 11 to each other, therefore inserting the hooks 18 extending from one of such elements into the eyelets of an adjacent sheet element.

Furthermore, the sheet element may have various heights and various lengths, depending on the type of application.

Basically, it has been shown that the invention achieves the pre-set task and objects by providing a plant protection which can be anchored to the wires for supporting cultivation lines without having to use other elements.

The invention has allowed to provide a plant protection which can be anchored to wires for supporting cultivation lines in an easier and quicker manner with respect to similar plant protection of the known type.

The invention, thus conceived, is susceptible to numerous modifications and variants, all falling within the scope of the claims; furthermore, all details can be replaced by other technically equivalent elements.

Basically, the materials used, provided that they are compatible with the specific use, as well as the dimensions and contingent shapes, may vary depending on the technical needs and the state of the art.

Should the characteristics and techniques mentioned in any of the claims be followed by reference signs, such signs are deemed to have been added with the sole purpose of enhancing the intelligibility of the claims and therefore such reference signs shall not be deemed to limit the interpretation of each element identified by such reference signs by way of example.

## Claims

1. A protection (10) for plants (12), comprising a self-supporting sheet element (11) adapted to be closed on itself to surround a plant (12) and having openings (13) for aerating said plant (12), said protection (10) for plants (12) being **characterised in that** it has at least one hooking member (22) for coupling to a supporting wire (23) of a cultivation line.

2. Protection (10) for plants (12), as claimed in claim 1, **characterised in that** said hooking member (22) comprises a tab obtained in said sheet element (11).

3. Protection (10) for plants (12), as claimed in one or more of the preceding claims, **characterised in that** said tab has a triangular profile with a free vertex (24) fully detached from said sheet element (11) and facing downwards in use configuration.

4. Protection (10) for plants (12), as claimed in the preceding claim, **characterised in that** said tab is joined to the rest of said sheet element (11) at one side of said triangle, with substantially horizontal configuration, opposite to said free vertex (24) and arranged above the latter in use configuration.

5. Protection (10) for plants (12), as claimed in one or more of the preceding claims, **characterised in that** said sheet element (11) has at the lower part, with respect to the use position, ground penetration means (14).

6. Protection (10) for plants (12), as claimed in the preceding claim, **characterised in that** said ground penetration means (14) consist of tips protruding from the lower side, with respect to the use position, of said sheet element (11).

7. Protection (10) for plants (12), as claimed in the preceding claim, **characterised in that** said ground penetration means (14) have serrated protrusions (21).

8. Protection (10) for plants (12), as claimed in one or more of the preceding claims, **characterised in that** said openings (13) comprise holes (15) and/or eyelets (16).

9. Protection (10) for plants (12), as claimed in one or more of the preceding claims, **characterised in that** it comprises closing means (17) for closing said sheet element (11) with modulable width.

10. Protection (10) for plants (12), as claimed in one or more of the preceding claims, **characterised in that** said closing means (17) for closing said sheet element (11) comprise at least one hook (18) extending from one side (19) of said sheet element (11) and to be inserted, with an end portion (20) thereof, into an eyelet (16) and/or hole (15) present on said sheet element (11).

11. Protection (10) for plants (12), as claimed in one or more of the preceding claims, **characterised in that** it comprises, on said sheet element (11), a plurality of eyelets (16) which are parallel and into one of them there is inserted said hook (18).
